Europäisches Patentamt
European Patent Office
Office européen des brevets

(19)

(11) Veröffentlichungsnummer : **0 325 087 B1**

(12) **EUROPÄISCHE PATENTSCHRIFT**

(45) Veröffentlichungstag der Patentschrift : **10.07.91 Patentblatt 91/28**

(51) Int. Cl.$^5$ : **B23B 31/02**

(21) Anmeldenummer : **88810780.2**

(22) Anmeldetag : **14.11.88**

(54) **Werkzeughalter für Bohr- und Meisselgeräte und Werkzeug.**

(30) Priorität : **24.12.87 DE 3744091**

(43) Veröffentlichungstag der Anmeldung : **26.07.89 Patentblatt 89/30**

(45) Bekanntmachung des Hinweises auf die Patenterteilung : **10.07.91 Patentblatt 91/28**

(84) Benannte Vertragsstaaten : **AT BE CH DE FR GB IT LI SE**

(56) Entgegenhaltungen : **DE-A- 3 434 076**

(73) Patentinhaber : **HILTI Aktiengesellschaft FL-9494 Schaan (LI)**

(72) Erfinder : **Deutschenbaur, Paul Dianastrasse 10 W-8034 Germering (DE)**
Erfinder : **Rupprecht, Hans Ettalstrasse 24 W-8000 München 70 (DE)**
Erfinder : **Hoyss, Franz Georg-Schwaighofer-Strasse 7 W-8170 Wackersberg (DE)**

(74) Vertreter : **Wildi, Roland Hilti Aktiengesellschaft Patentabteilung FL-9494 Schaan (LI)**

**EP 0 325 087 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen Werkzeughalter für Bohr- und Meisselgeräte und ein Werkzeug, wobei der Werkzeughalter eine Aufnahmehülse mit in Einführrichtung des Werkzeuges zumindest teilweise kegelig verjüngter Aufnahmeöffnung für den Einsteckschaft des Werkzeuges und unter Federkraft im wesentlichen radial in die Aufnahmeöffnung einrückbare, dazu tangential verlaufende Stifte aufweist, wobei in der Aufnahmeöffnung achsparallele Mitnehmerleisten zum Eingriff in Nuten des Ausnehmungen für die Stifte aufweisenden Einsteckschaftes vorgesehen sind, und zum Ausrücken der Stifte aus der Aufnahmeöffnung eine gegenüber der Aufnahmehülse entgegen der Einführrichtung axial begrenzt verschiebbare Betätigungshülse vorgesehen ist.

Ein aus der DE-A1-34 34 076 bekannter Werkzeughalter gewährleistet im Bohrbetrieb eine exakte zentrische Führung und zuverlässigen axialen Halt des eingesetzten Werkzeuges. Während der Anbohrphase können mangels seitlicher Führung des Werkzeuges derart hohe Querkräfte auftreten, dass ein Lösen des Werkzeuges nicht ausgeschlossen ist.

Der Erfindung liegt die Aufgabe zugrunde, einen Werkzeughalter und ein Werkzeug der eingangs genannten Art derart auszubilden, dass auch beim Auftreten hoher Querkräfte nebst einer exakten zentrischen Führung ein zuverlässiger Halt des Werkzeuges gewährleistet ist.

Erfindungsgemäss wir die Aufgabe dadurch gelöst, dass die Betätigungshülse und das Werkzeug miteinander zusammenwirkende Verbindungsmittel aufweisen.

Durch die Verbindungsmittel lässt sich das durch Stifte in der Aufnahmehülse gehaltene Werkzeug von der Betätigungshülse unter axialem Verspannen der kegeligen Konturen von Aufnahmeöffnung und Einsteckschaft zuverlässig spannen.

Der Werkzeughalter mit dem eingespannten Werkzeug ist im Arbeitseinsatz nebst Querkräften auch Erschütterungen ausgesetzt, so dass zweckmässigerweise ein dem Lösen der Verbindungsmittel entgegenwirkendes Sicherungselement vorgesehen ist. Als Sicherungselemente eignen sich beispielsweise Klemmringe, Rasten oder Sperrbolzen.

Das Verbindungsmittel des Werkzeughalters ist vorzugsweise ein Innengewinde an der Betätigungshülse. Korrespondierend dazu eignet sich als werkzeugseitiges Verbindungsmittel ein Aussengewinde am Einsteckschaft.

Eine durch das Innengewinde am Werkzeughalter und das Aussengewinde am Werkzeug geschaffene Gewindeverbindung erlaubt ohne Hilfswerkzeuge ein ausreichendes Verspannen des Einsteckschaftes in der Aufnahmehülse. Zweckmässig ist zum erleichterten manuellen Aufbringen des für den Schraubvorgang erforderlichen Drehmomentes an der Betätigungshülse eine Randrierung oder eine Kordelung vorgesehen. Die Spannkraft wird durch Aufschrauben der Betätigungshülse auf dem Werkzeug erzielt, wobei sich die Betätigungshülse entgegen der Einführrichtung des Werkzeuges über Anschlagmittel an der Aufnahmehülse axial abstützt.

Die Erfindung wird nachstehend anhand von Zeichnungen, die ein Ausführungsbeispiel wiedergeben, näher erläutert :

Fig. 1 Einen Werkzeughalter, teilweise im Längsschnitt ;
Fig. 2 einen Schnitt durch den Werkzeughalter, nach Fig. 1, gemäss Schnittverlauf II-II ;
Fig. 3 den Werkzeughalter nach Fig. 1, mit Werkzeug.

Der Werkzeughalter 1 weist eine Aufnahmehülse 2 mit einer teilweise kegeligen Aufnahmeöffnung 2a auf. In Verjüngungsrichtung der Aufnahmeöffnung 2a schliesst achsgleich eine im wesentlichen zylindrische Bohrung 2b an. Die Wandung der Bohrung 2b trägt eine Keilwellenverzahnung 2c dur drehschlüssigen Verbindung mit einer Abtriebsspindel eines Bohr- oder Meisselgerätes. Mittels einer in der Aufnahmehülse 2 sitzenden Spannschraube 3 kann der Werkzeughalter 1 auf der Abtriebsspindel axial gesichert werden. Im Bereich der Aufnahmeöffnung 2a ist ein Ring 4 festgeschraubt, der innenseitig durch eine Verzahnung gebildete, in die lichte Weite der Aufnahmeöffnung 2a ragende Mitnehmerleisten 4a trägt.

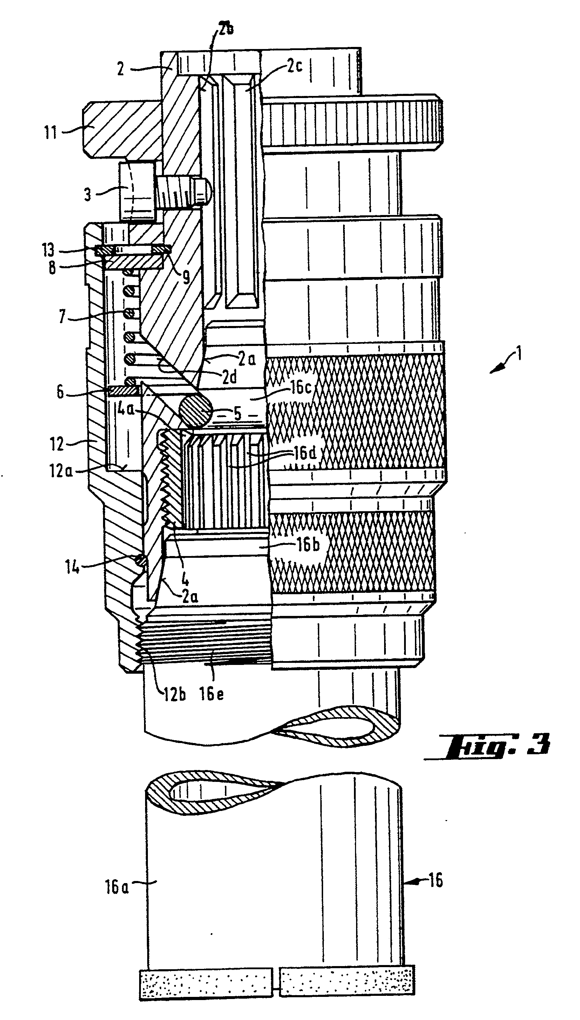

In die Aufnahmeöffnung 2a treten zwei einander diametral gegenüberliegende, schräg zur Achse der Aufnahmehülse 2 sich erstreckende Querschlitze 2d ein. In jedem Querschlitz 2d ist ein Stift 5 tangential zur Aufnahmeöffnung 2a entlang der Schlitztiefe verschiebbar gelagert. Die Enden der Stifte 5 überragen die Aussenkontur des die Querschlitze 2d tragenden Bereichs der Aufnahmehülse 2, wie dies die Fig. 2 zeigt.

An den Enden der Stifte 5 stützt sich axial eine Zustellscheibe 6 ab, die zur Aufnahmehülse 2 konzentrisch verschiebbar gelagert ist. Die Zustellscheibe 6 ist von einer Druckfeder 7 beaufschlagt, wobei ein Anschlagring 8 als Widerlager dient. Der Anschlagring 8 wird von einem Sicherungsring 9 zu der Aufnahmehülse 2 axial in Position gehalten. Auf der Aufnahmehülse 2 sitzt ein sich am Sicherungsring 9 abstützender Gegenhaltering 11.

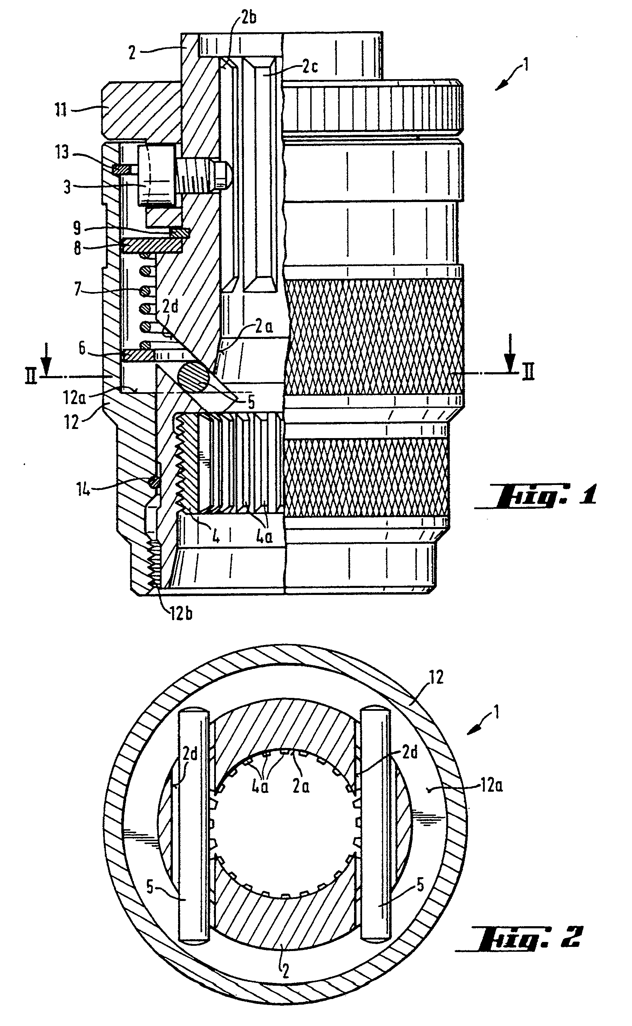

Die Aufnahmehülse 2 trägt ferner zu dieser konzentrisch verschieb- und verdrehbar eine Betätigungshülse 12. Ein in der Betätigungshülse 12 festsitzender Stützring 13 liegt in der Axialprojektion des Anschlagringes 8 und dient der Begrenzung des Verschiebeweges der Betätigungshülse 12. Die Betätigungshülse 12 trägt eine Schulter 12a, welche die Stifte 5 unterfasst und so ein Ausrücken der Stifte 5 aus der lichten Weite der Aufnahmeöffnung 2a ermöglicht, wie dies die Fig. 1 zeigt. Das Ausrücken der Stifte 5 erfolgt unter Verschieben der Zustellscheibe 6 gegen die Kraft der Druckfeder 7. In der Betätigungshülse 12 ist ein Sicherungselement 14 in Form eines elastischen Ringes gelagert, das mit der Aufnahmehülse 2 verspannt ist. Endseitig trägt die Betätigungshülse 12 ein Innengewinde 12b.

Das Werkzeug 16, wie dies in Fig. 3 dargestellt ist, verfügt über einen im wesentlichen hohlzylindrischen Grundkörper 16a mit Schneidende und über einen Einsteckschaft 16b. Der Einsteckschaft 16b ist teilweise kegelig ausgebildet und trägt Ausnehmungen 16c in Form einer umlaufenden Ringnut. In einem Mittelabschnitt des Einsteckschaftes 16b ist zur Bildung von Nuten 16d ein Vielzahnprofil vorgesehen. Der Einsteckschaft 16b trägt ein Aussengewinde 16e.

Das Werkzeug 16 wird mit dem Einsteckschaft 16b axial in die Aufnahmeöffnung 2a der Aufnahmehülse 2 eingeführt. Dadurch kommt die kegelige Aussenkontur des Einsteckschaftes 16b in Eingriff mit der kegeligen Kontur der Aufnahmeöffnung 2a und die Mitnehmerleisten 4a treten in die Nuten 16d ein. Das in den Werkzeughalter 1 eingeführte Werkzeug 16 wird durch Einrücken der Stifte 5 in die Ausnehmungen 16c verriegelt. Hierzu wird die Betätigungshülse 12 entgegen der Einführrichtung des Werkzeuges 16 verschoben, so dass die federbelastete Zustellscheibe 6 die Stifte 5 in die Ausnehmungen 16c einrückt. Die Betätigungshülse 12 läuft dabei mit dem Innengewinde 12b am korrespondierenden werkzeugseitigen Aussengewinde 16e auf. Durch Aufschrauben der Betätigungshülse 12 auf das Werkzeug 16 wird der Einsteckschaft 16b mit dessen kegeliger Kontur in der kegeligen Kontur der Aufnahmeöffnung 2a verspannt. Zum Aufbringen der Spannkraft steht der Stützring 13 am Anschlagring 8 auf, wie dies der Fig. 3 entnehmbar ist. Das Sicherungselement 14 unterbindet ein selbsttätiges Zurückdrehen der Betätigungshülse 12 und verhindert so ein Lösen der Werkzeuges 16.

## Ansprüche

1. Werkzeughalter (1) für Bohr- und Meisselgeräte und Werkzeug (16), wobei der Werkzeughalter (1) eine Aufnahmehülse (2) mit in Einführrichtung des Werkzeuges (16) zumindest teilweise kegelig verjüngter Aufnahmeöffnung (2a) für den Einsteckschaft (16b) des Werkzeuges (16) und unter Federkraft im wesentlichen radial in die Aufnahmeöffnung (2a) einrückbare, dazu tangential verlaufende Stifte (5) aufweist, wobei in der Aufnahmeöffnung (2a) achsparallele Mitnehmerleisten (4a) zum Eingriff in Nuten (16d) des Ausnehmungen (16c) für die Stifte (5) aufweisenden Einsteckschaftes (16b) vorgesehen sind, und zum Ausrücken der Stifte (5) aus der Aufnahmeöffnung (2a) eine gegenüber der Aufnahmehülse (2) entgegen der Einführrichtung axial begrenzt verschiebbare Betätigungshülse (12) vorgesehen ist, **dadurch gekennzeichnet**, dass die Betätigungshülse (12) und das Werkzeug (16) miteinander zusammenwirkende Verbindungsmittel (12b, 16e) aufweisen.

2. Werkzeughalter nach Anspruch 1, dadurch gekennzeichnet, dass ein dem Lösen der Verbindungsmittel (12b, 16e) entgegenwirkendes Sicherungselement (14) vorgesehen ist.

3. Werkzeughalter nach Anspruch 1 oder 2, dadurch gekennzeichnet, dass das Verbindungsmittel ein Innengewinde (12e) an der Betätigungshülse (12) ist.

4. Werkzeug nach Anspruch 1, dadurch gekennzeichnet, dass das Verbindungsmittel ein Aussengewinde (16e) am Einsteckschaft (16b) ist.

## Claims

1. Tool chuck (1) for drilling and chiselling machines and tools (16), whereby the tool chuck (1) comprises a receiving sleeve (2) including at least partially conical receiving aperture (2a) narrowing in the direction of insertion for the insert shaft (16b) of the tool (16), and tangentially thereto extending pins (5) which are substantially radially inserted into the receiving aperture (2a) by means of a spring force, whereby axis-parallel drive ledges (4a) are provided in the receiving aperture (2a) for engaging grooves (16d) of the recesses (16c) for the pins (5), and with an actuating sleeve (12), which has limited axial movability relative to the receiving sleeve (2) in opposition to the receiving direction, for outward movement of the pins (5) from the receiving aperture (2a), characterised in that the actuating sleeve (12) and the tool (16) comprise co-acting connecting means (12b, 16e).

2. Tool chuck according to claim 1, characterised in that a safety element (14) is provided, which counters a release of the connecting means (12b, 16e).

3. Tool chuck according to claim 1 or 2, characterised in that the connecting means is an internal thread (12e) at the actuating sleeve (12).

4. Tool according to claim 1, characterised in that the connecting means is an external thread (16e) at the insert shaft (16b).

## Revendications

1. Porte-outil (1) et outil (16) pour appareils à forer et à buriner, le porte-outil (1) comprenant une douille de réception (2) avec une ouverture de réception (2a) pour la tige d'enmanchement (16b) de l'outil (16), qui se rétrécit au moins partiellement de manière conique dans la direction d'introduction de l'outil (16), et des broches (5) qui, sous l'action d'un ressort, peuvent être engagées sensiblement radialement dans l'ouverture de réception (2a) et s'étendent tangentiellement par rapport à celle-ci, des baguettes d'entraînement (4a) étant prévues dans l'ouverture de réception (2a), disposées parallèlement à l'axe et destinées à s'engager dans des rainures (16d) de la tige d'enmanchement (16b) qui présente des évidements (16c) pour les broches (5), et une douille de commande (12) déplaçable de manière limitée dans le sens axial, dans le sens opposé à la direction d'introduction, par rapport à la douille de réception (2) étant prévue pour le dégagement des broches (5) de l'ouverture de réception (2a), **caractérisé en ce** que la douille de commande (12) et l'outil (16) comprennent des moyens de liaison (12b, 16e) coopérant les uns avec les autres.

2. Porte-outil selon la revendication 1, caractérisé en ce qu'il comprend un élément de blocage (14) qui s'oppose au détachement des moyens de liaison (12b, 16e).

3. Porte-outil selon l'une des revendications 1 ou 2, caractérisé en ce que le moyen de liaison est un filetage intérieur (12e) sur la douille de commande (12).

4. Outil selon la revendication 1, caractérisé en ce que le moyen de liaison est un filetage extérieur (16e) sur la tige d'enmanchement (16b).

2b
2
2c
1
11
13
3
9
8
7
2d
2a
6
II
II
12a
5
12
14
Fig. 1
4
4a
12b
12
1
2d
2d
4a
2a
12a
5
5
Fig. 2
2

2b
2
2c
11
3
13
8
9
7
2a
2d
6
16c
4a
5
12
16d
12a
16b
14
4
2a
12b
16e
1
16a
16

Fig. 3